# EUROPÄISCHE PATENTSCHRIFT

(11) **EP 2 516 477 B1**
(45) Veröffentlichungstag und Bekanntmachung des Hinweises auf die Patenterteilung: **08.01.2014**
(21) Anmeldenummer: 10793190.9
(22) Anmeldetag: 29.11.2010
(51) Int. Cl.: C08F 4/00, C08F 2/38, C08F 20/00, C08F 20/18

(54) **NEUES INITIIERUNGSVERFAHREN ZUR POLYMERISATION VON (METH) ACRYLATEN**
NOVEL INITIATION METHOD FOR POLYMERIZING (METH)ACRYLATES
NOUVEAUX PROCÉDÉS D'AMORÇAGE POUR LA POLYMÉRISATION DE (MÉTH)ACRYLATES

(30) Priorität: 21.12.2009 DE 102009055061
(43) Veröffentlichungstag der Anmeldung: 31.10.2012
(73) Patentinhaber: Evonik Degussa GmbH, 45128 Essen (DE); Evonik Röhm GmbH, 64293 Darmstadt (DE)
(72) Erfinder: SCHMIDT, Friedrich Georg, 45721 Haltern am See (DE); SPYROU, Emmanouil, 46514 Schermbeck (DE); KRAUSE, Simon, 63743 Aschaffenburg (DE); SPANGE, Stefan, 07768 Orlamünde (DE); POLENZ, Ingmar, 08491 Limbach (DE); HASE, Katja, 09405 Zschopau (DE)
(86) Internationale Anmeldenummer: PCT/EP2010/068363
(87) Internationale Veröffentlichungsnummer: WO 2011/085856

(56) Entgegenhaltungen:
- DE-A1- 10 321 039
- US-A- 4 129 702
- H. OKAMOTO ET AL.: "Polymerization of Methyl Methacrylate by Organic Isocyanate-Triethylamine Systems", JOURNAL OF POLYMER SCIENCE, POLYMER CHEMISTRY EDITION, INTERSCIENCE PUBLISHERS, NEW YORK, NY, US, Bd. 12, 1. Januar 1974 (1974-01-01), Seiten 1135-1140, XP007917385, ISSN: 0360-6376 in der Anmeldung erwähnt

## Beschreibung

### Gebiet der Erfindung

Die vorliegende Erfindung betrifft eine neuartige Polymerisationsmethode für (Meth)acrylate, bei der die Polymerisation durch Isocyanate und spezielle Basen mit Imin-Struktur initiiert wird. Mit dieser neuen und gezielt einsetzbaren Methode können auch hochmolekulare Poly(meth)acrylate mit zum teil enger Molekulargewichtsverteilung hergestellt werden. Darüber hinaus sind unter Einsatz dieser neuen polymerisationsmethode unterschiedlichste Polymerarchitekturen, wie Block-, Stern- oder Kammpolymere, verfügbar.

Die Schreibweise (Meth)acrylat bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

### Stand der Technik

Zur Polymerisation von (Meth)acrylaten ist eine Reihe von Polymerisationsmethoden bekannt. Vor allem die freiradikalische Polymerisation ist großtechnisch von entscheidender Bedeutung. Sie wird als Substanz-, Lösungs-, Emulsions- oder Suspensionspolymerisation vielfach zur Synthese von Poly(meth)acrylaten für unterschiedlichste Anwendungen eingesetzt. Dazu zählen Formmassen, Plexiglas, Lackbindemittel, Additive oder Komponenten in Kleb- oder Dichtstoffen, um nur einige aufzuzählen. Nachteil der freiradikalischen Polymerisation ist jedoch, dass keinerlei Einfluss auf die Polymerarchitektur genommen werden kann, dass nur sehr unspezifisch funktionalisiert werden kann, und dass die Polymere mit breiten Molekulargewichtsverteilungen anfallen.
Hochmolekulare und/oder eng verteilte Poly(meth)acrylate sind dagegen mittels einer anionischen Polymerisation verfügbar. Nachteile dieser Polymerisationsmethode sind dagegen die hohen Ansprüche an die Prozessführung z.B. bezüglich Feuchtigkeitsausschluss oder Temperatur, und die Unmöglichkeit, funktionelle Gruppen an der Polymerkette zu realisieren. Ähnliches gilt für die Gruppentransferpolymerisation von Methacrylaten, die bis heute von nur sehr geringer Bedeutung ist.

Als lebende bzw. kontrollierte Polymerisationsmethoden eignen sich neben der anionischen auch moderne Methoden der kontrollierten radikalischen Polymerisation. Sowohl das Molekulargewicht als auch die Molekulargewichtsverteilung sind regelbar. Als lebende Polymerisation gestatten sie ferner den gezielten Aufbau von Polymerarchitekturen wie beispielsweise statistische Copolymere oder auch Block-Copolymer-Strukturen.

Ein Beispiel ist die RAFT-Polymerisation (reversible addition fragmentation chain transfer polymerization). Der Mechanismus der RAFT-Polymerisation wird in EP 0 910 587 näher beschriebe. Nachteile der RAFT-Polymerisation sind vor allem die eingeschränkte Synthesemöglichkeit von kurzkettigen Poly(meth)acrylaten oder von Hybridsystemen und der Verbleib von Schwefelgruppen im Polymer.

Die NMP-Methode (nitroxide mediated polymerization) dagegen ist nur sehr eingeschränkt für die Synthese von Poly(metn)acrylaten einsetzbar. Diese Methode hat bezüglich diversen funktionellen Gruppen und der gezielten Einstellung des Molekulargewichts große Nachteile.

Die ATRP-Methode (atom transfer radical polymerization) wurde in den 1990-er Jahren maßgeblich von Prof. Matyjaszewski entwickelt (Matyjaszewski et al., J.Am.Chem.Soc., 1995, 117, S.5614; WO 97/18247; Science, 1996, 272, S.866). Die ATRP liefert engverteilte Polymere im Molmassenbereich von Mₙ=10.000-120.000 g/mol. Nachteil ist vor allem die Verwendung von Übergangsmetallkatalysatoren, vor allem von Kupferkatalysatoren, die nur sehr aufwendig bzw. nur unvollständig aus dem Produkt entfernt werden können. Darüber hinaus sind Säuregruppen bei der Polymerisation störend, so dass solche Funktionalitäten nicht direkt mittels ATRP realisierbar sind.

In Okamoto et al (J.of Pol. Sci.: Polymer Chemistry, 12, 1974, S.1135-1140) wird die Initiierung einer MMA-Polymerisation mit Triethylamin und Isocyanaten beschrieben. Dieses System führt jedoch nur zu Ausbeuten unterhalb von 20 %.

### Aufgabe

Aufgabe der vorliegenden Erfindung ist die Bereitstellung einer neuen Polymerisationsmethode für die Polymerisation von (Meth)acrylaten.

Insbesondere besteht die Aufgabe, eine Polymerisationsmethode zur Verfügung zu stellen, mittels derer hochmolekulare Poly(meth)acrylate mit optional engen Molekulargewichtsverteilungen in Ausbeuten größer 20 % herstellbar sind.

Darüber hinaus ist eine weitere Aufgabe, eine Polymerisationsmethode für (Meth)acrylate zur Verfügung zu stellen, die variabel und vielseitig einsetzbar ist und die keine störenden Initiator- bzw. Katalysatorreste wie Übergangsmetalle im Polymerisat hinterlässt.

Weitere nicht explizit genannte Aufgaben ergeben sich aus dem Gesamtzusammenhang der nachfolgenden Beschreibung, Ansprüche und Beispiele.

### Lösung

Gelöst wurden die Aufgaben durch einen sehr überraschend gefundenen neuen Initiierungsmechanismus, mit dem eine Polymerisation von vinylischen Monomeren M gestartet werden kann. Unter vinylischen Monomeren M werden in diesem Zusammenhang Monomere verstanden, die eine Kohlenstoff-Kohlenstoff-Doppelbindung aufweisen. In der Regel lassen sich solche Monomere radikalisch und/oder anionisch polymerisieren. In diesem neuen Verfahren wird die Polymerisation der Monomere M durch Vorliegen einer Komponente A und einer Komponente B initiiert. Bei Komponente A handelt es sich um ein Isocyanat oder ein Carbodiimid. Bei der Komponente B handelt es sich um eine organische Base.

Dabei gibt es zwei bevorzugte Verfahren zur Durchführung der Initiierung. In einem wird zu einer Mischung der Komponente A und des vinylischen Monomers M Komponente B gegeben. In dem anderen wird umgekehrt zur Initiierung zu einer Mischung der Komponente B und des vinylischen Monomers M Komponente A gegeben.

Bei der Komponente B handelt es sich bevorzugt um eine tertiäre organische Base, besonders bevorzugt um eine organische Base, die eine Kohlenstoff-Stickstoff-Doppelbindung aufweist, oder alternativ um ein Trithiocarbonat.

Insbesondere sind Basen, folgende funktionelle Gruppen aufweisend, zur Verwendung in dem erfindungsgemäßen Initiierungsverfahren geeignet: Imine, Oxazoline, Isoxazolone, Thiazoline, Amidine, Guanidine, Carbodiimide, Imidazole oder Trithiocarbonate.

Unter Iminen versteht man Verbindungen, die eine (Rx)(Ry)C=N(Rz)-Gruppen aufweisen. Dabei sind die beiden Gruppen am Kohlenstoffatom Rx und Ry und die eine Gruppe am Stickstoffatom Rz frei wählbar, unterschiedlich oder identisch zueinander und es ist auch möglich, dass diese einen oder mehrere Cyclen bilden. Beispiele für solche Imine sind 2-Methylpyrrolin (1), N-Benzylidenmethylamin (BMA, (2)) oder N-4-Methoxybenzylidenanilin (3).

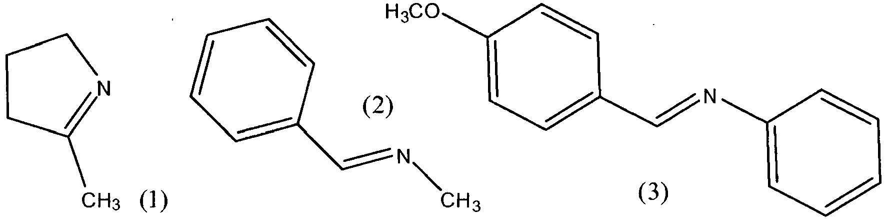

Oxazoline sind Verbindungen, die eine (Ry)O-C(Rx)=N(Rz)-Gruppe aufweisen. Auch bei diesen Verbindungen sind die Gruppen am Kohlenstoffatom Rx, am Sauerstoff Ry und am Stickstoffatom Rz jeweils frei wählbar, unterschiedlich oder identisch zueinander und es ist auch möglich, dass diese einen oder mehrere Cyclen bilden. Beispiele für Oxazoline sind 2-Ethyloxazolin (4) und 2-Phenyloxazolin (5):

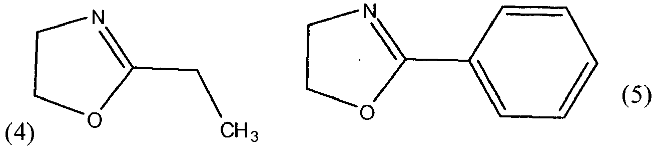

Bei Isoxazolonen handelt es sich um Verbindungen mit dem Strukturelement (6):

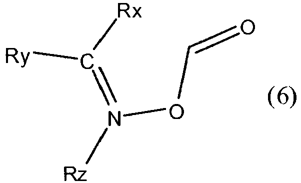

Auch für die beiden Gruppen am Kohlenstoffatom Rx bzw. Ry und die eine Gruppe am Stickstoffatom Rz der Isoxazolone gilt, dass diese frei wählbar und unterschiedlich oder identisch zueinander sein können. Auch ist es möglich, dass diese einen oder mehrere Cyclen bilden. Ein Beispiel für ein solches Isoxazolon ist 3-Phenyl-5-isoxazolon (7):

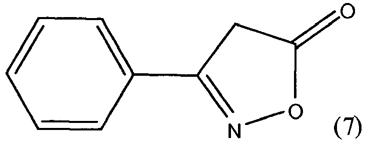

Bei Thiazolinen handelt es sich um Verbindungen mit dem Strukturelement (8) oder (9):

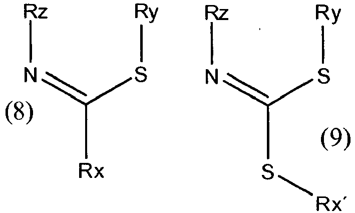

Für die Gruppen am Kohlenstoffatom Rx, am Schwefelatom Ry, am zweiten Schwefelatom Rx' und am Stickstoffatom Rz gilt, dass diese frei wählbar und unterschiedlich oder identisch zueinander sein können. Auch ist es möglich, dass diese einen oder mehrere Cyclen bilden. Beispiele für solche Thiazoline sind 2-Methylthiazolin (10) oder 2-Methylmercaptothiazolin (11) :

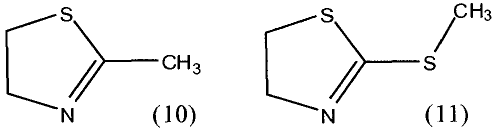

Bei Amidinen handelt es sich um Verbindungen mit dem Strukturelement (12), bei Guanidinen um Verbindungen mit dem Strukturelement (13):

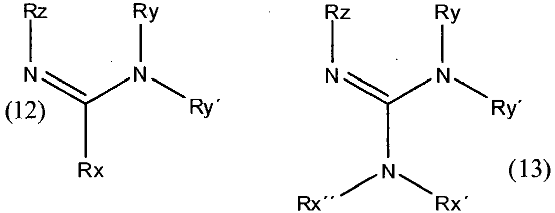

Für die Gruppen am Kohlenstoffatom Rx, am Stickstoffatom Rz, am zweiten Stickstoffatom Ry und Ry' und am dritten Stickstoffatom Rx' und Rx'' gilt, dass diese frei wählbar und unterschiedlich oder identisch zueinander sein können. Auch ist es möglich, dass diese einen oder mehrere Cyclen bilden. Beispiele für Amidine sind 1,8-Diazabicyclo[5.4.0]undec-7-en (DBU, (14)), 1,5-Diazabicyclo[4.3.0]non-5-en (DBN, (15)) oder N-(3-Triethoxysilylpropyl)-4,5-dihydroimidazol (PDHI, (16)):

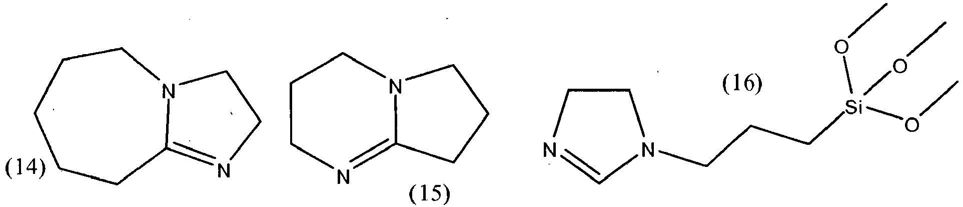

Beispiele für die Guanidine sind 7-Methyl-1,5,7-triazabicyclo[4.4.0]dec-5-en (MTBD, (17)), 1,1,3,3-Tetramethylguanidin (TMG, (18)) oder *N-tert*-Butyl-1,1-,3,3-tetramethylguanidin (19):

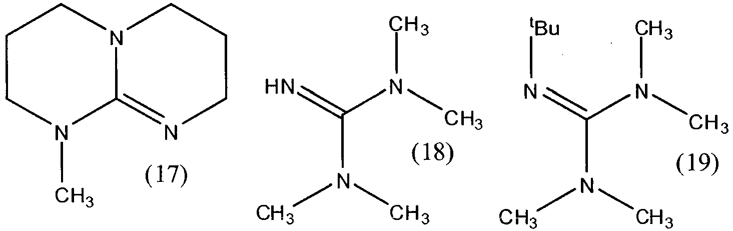

Bei der Gruppe der Carbodiimide handelt es sich um Verbindungen mit dem Strukturelement (Rz)-N=C=N=(Rz'). Für die Gruppen an den Stickstoffatomen Rz und Rz' gilt, dass diese frei wählbar und unterschiedlich oder identisch zueinander sein können. Auch ist es möglich, dass diese einen oder mehrere Cyclen bilden. Ein Beispiel für Carbodiimide ist Diisopropylcarbodiimid (20):

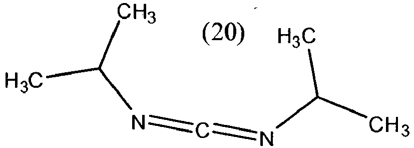

Zusätzlich einsetzbare Verbindungen können Imidazol (21) oder 1-Methylimidazol (22) sein:

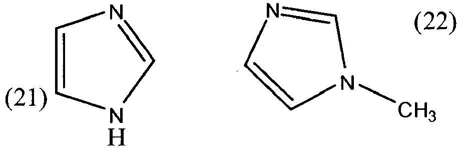

Beispiele für einsetzbare organische Basen, ohne C=N-Bindung sind Trithiocarbonate mit dem Strukturelement (23):

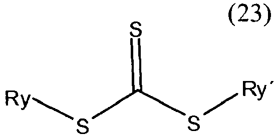

Für die Gruppen an den beiden Schwefelatomen Ry und Ry' gilt, dass diese frei wählbar und unterschiedlich oder identisch zueinander sein können. Auch ist es möglich, dass diese einen oder mehrere Cyclen bilden. Ein Beispiel für Trithiocarbonate ist Ethylidentrithiocarbonat (24):

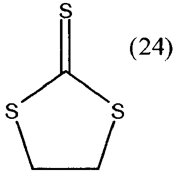

Die Beispiele für die organischen Basen sind in keinerlei Weise dazu geeignet die Erfindung in irgendeiner Form einzuschränken. Sie dienen vielmehr dazu, die Vielzahl von Verbindungen, die erfindungsgemäß einsetzbar sind, zu verdeutlichen.

Bei der Komponente A handelt es sich um Isocyanate, die ein-, zwei- oder mehrfach funktionalisiert sein können. Die Formulierung Isocyanat umfasst im Weiteren auch die chemisch äquivalenten Thioisocyanate.
Bei den weiteren Funktionalitäten kann es sich in einer Ausführungsform um eine zweite, bzw. weitere Isocyanat-gruppen handeln. In einer anderen Ausführungsform ist es auch möglich, dass es sich bei den weiteren Funktionalitäten um andere Funktionalitäten, die zusammen mit Isocyanat-Gruppen stabile Verbindungen bilden, handelt.

Beispiele für monofunktionelle Isocyanate sind Cyclohexylisocyanat (25), Phenylisocyanat (26) und tert-Butylisocyanat (27). Beispiel für ein monofunktionelles Thioisocyanat ist Phenylthioisocyanat (28):

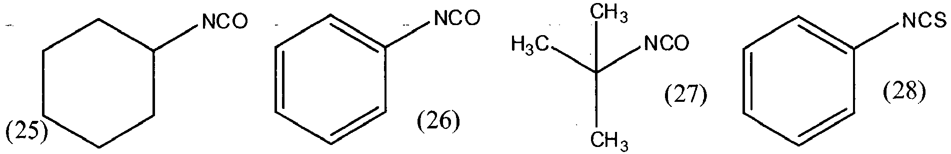

Beispiele für bifunktionelle Isocyanate mit zwei Isocanatgruppen sind 1,6-Hexamethylendiisocyanat (HDI, (29)), Toluendiisocyanat (TDI, (30)) und Isophorondiisocyanat (IPDI, (31)):

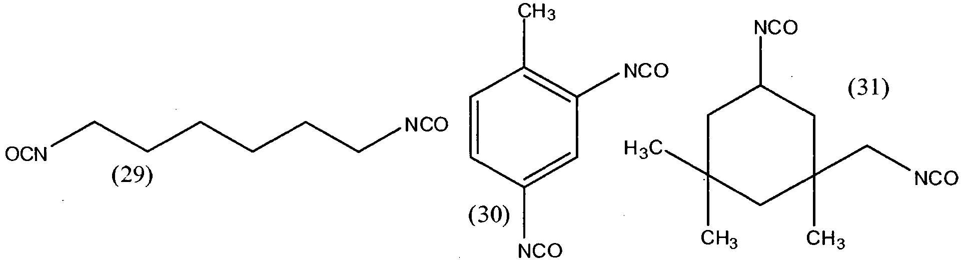

Weitere Beispiele sind Kondensate dieser bifunktionellen Isocyanate, insbesondere Trimere der Isocyanate mit zwei Isocyanat-Gruppen wie das HDI-Trimer (32) oder das IPDI-Trimer (33) :

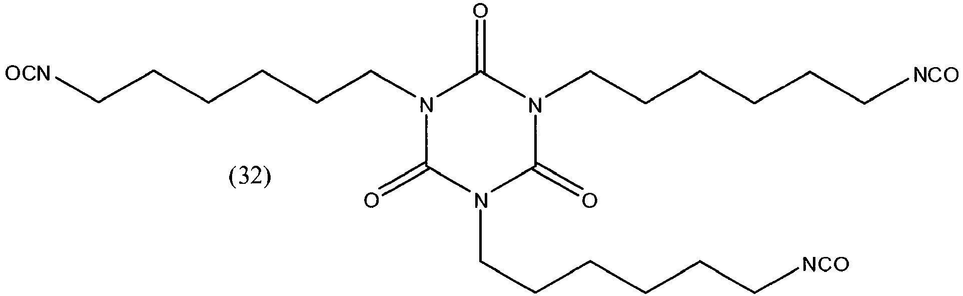

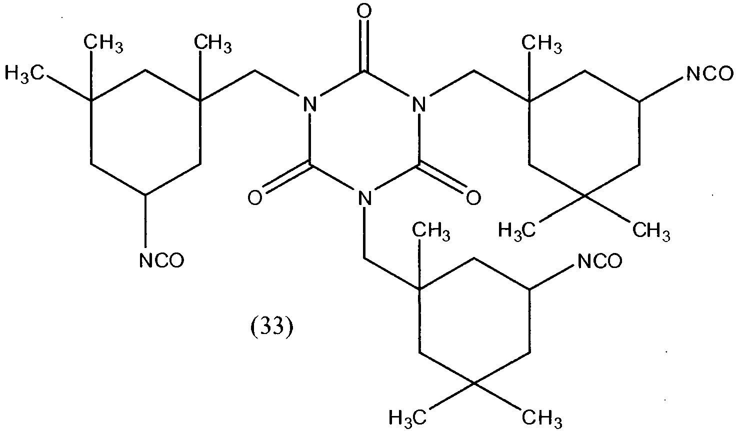

Darüber hinaus können auch monofunktionelle, lineare Isocyanate wie Dodecylisocyanat (34) oder Ethylisocyanat (35) verwendet werden:

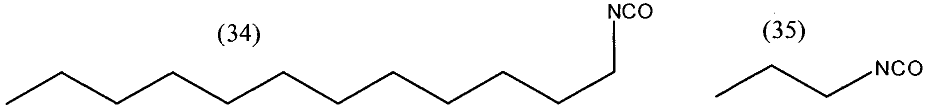

Alternativ zu den Isocyanaten können auch Carbodiimide verwendet werden. Dabei handelt es sich um Verbindungen mit dem Strukturelement (Rz)-N=C=N-(Rz') entsprechend der bereits geschilderten Struktur, wie sie zu den einsetzbaren organischen Basen ausgeführt wurde. Ein Beispiel für ein Carbodiimid, das anstelle von Isocyanaten einsetzbar ist, ist Diisopropylcarbodiimid (20):

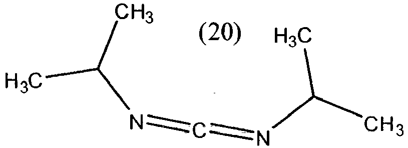

In einer besonderen Ausführungsform der Erfindung unter Verwendung von Carbodiimiden können beide Komponenten A und B identisch sein. In dieser Ausführungsform ist es auch nicht nötig, eine der beiden Komponenten zeitversetzt dem System zuzugeben, so dass in dieser Ausnahme der Ausführung ein einkomponentiges Initiatorsystem vorliegt.

In einer alternativen Ausführungsform ist es auch möglich, dass aus den beiden Komponenten Isocyanat und organische Base erst ein Addukt gebildet wird, das an sich wiederum eine Polymerisation initiieren kann. Diese Intermediate sind auch isolierbar, so dass sie als alternative Initiatoren eingesetzt werden können. Ein Beispiel für ein solches Addukt ist das Reaktionsprodukt (36) aus zwei Molekülen TMG (18) und HDI (29) :

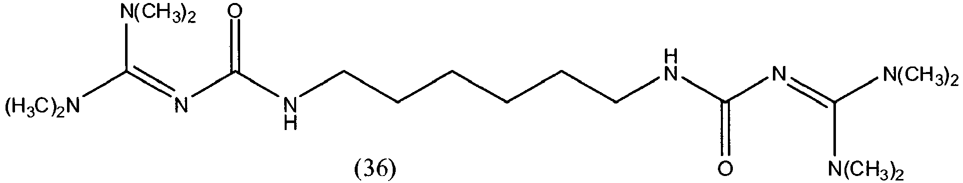

Das erfindungsgemäße Verfahren zur Initiierung einer Polymerisation ist grundsätzlich unabhängig von dem verwendeten Polymerisationsverfahren. Das Verfahren zur Initiierung und die anschließende Polymerisation können beispielsweise in Form einer Lösungs- oder Substanzpolymerisation, durchgeführt werden. Die Polymerisation kann in Batch-Fahrweise oder kontinuierlich durchgeführt werden. Die Polymerisation kann ferner über das gesamte übliche Temperaturspektrum und bei Über-, Normal- oder Unterdruck durchgeführt werden.

Ein besonderer Aspekt der vorliegenden Erfindung ist, dass die aus dem Verfahren erhaltenen Polymere in einem sehr breiten Molekulargewichtsbereich anfallen. Diese Polymere können gemäß einer GPC-Messung gegen einen Polystyrol-Standard ein Molekulargewicht zwischen 1000 und 10 000 000 g/mol, insbesondere zwischen 5000 und 5 000 000 g/mol und ganz besonders zwischen 10 000 und 2 000 000 g/mol aufweisen.

Bei den vinylischen Monomeren M handelt es sich um Monomere, die eine Doppelbindung aufweisen, insbesondere um Monomere mit Doppelbindungen, die radikalisch und/oder anionisch polymerisierbar sind. Insbesondere handelt es sich um Acrylate, Methacrylate, Styrol, von Styrol abgeleitete Monomere, α-Olefine oder Mischungen aus diesen Monomeren.

Die Schreibweise (Meth)acrylate steht im Weiteren für Alkylester der Acrylsäure und/oder der Methacrylsäure.

Im Allgemeinen sind die Monomere ausgewählt aus der Gruppe der Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, i-Butyl(meth)acrylat, t-Butyl-(meth)acrylat, Pentyl(meth)acrylat, 2-Ethylhexyl(meth)acrylat, Stearyl-(meth)acrylat, Lauryl(meth)acrylat, Cyclohexyl(meth)acrylat, Isobornyl-(meth)acrylat; Aryl(meth)acrylate wie zum Beispiel Benzyl(meth)acrylat oder Phenyl(meth)acrylat die jeweils unsubstituiert oder 1-4-fach substituierte Arylreste aufweisen können; andere aromatisch substituierte (Meth)acrylate wie beispielsweise Naphthyl(meth)acrylat; Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyl-oxymethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat und Poly(propylenglycol)-methylether(meth)acrylat, zusammen.

Neben den zuvor dargelegten (Meth)acrylaten können auch weitere ungesättigte Monomere polymerisiert werden. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, 4-Methyl-1-penten, Acrylnitril, Vinylester wie z.B. Vinylacetat, Styrol, substituierte Styrole mit einem Alkylsubstituenten an der Vinylgruppe, wie z.B. α-Methylstyrol und α-Ethylstyrol, substituierte Styrole mit einem oder mehreren Alkylsubstituenten am Ring wie Vinyltoluol und p-Methylstyrol, heterocyclische Verbindungen wie 2-Vinylpyridin, 3-Vinylpyridin, 2-Methyl-5-vinylpyridin, 3-Ethyl-4-vinylpyridin, 2,3-Dimethyl-5-Vinylpyridin, Vinylpyrimidin, 9-Vinylcarbazol, 3-Vinylcarbazol, 4-Vinylcarbazol, 2-Methyl-1-vinylimidazol, Vinloxolan, Vinylfuran, Vinylthiophen, Vinylthiolan, Vinylthiazole, Vinyloxazole und Isoprenylether. Weitere Monomere sind beispielsweise Vinylpiperidin, 1-Vinylimidazol, N-Vinylpyrrolidon, 2-Vinylpirrolidon, N-Vinylpirrolidin, 3-Vinylpyrrolidin, N-Vinylcaprolactam, N-Vinylbutyrolactam, hydrierte Vinylthiazole und hydrierte Vinyloxazole.

Die nach dem neuartigen Verfahren hergestellten Polymere können in vielen Einsatzgebieten Verwendung finden. Dazu zählen, ohne mit diesen Beispielen die Erfindung in irgendeiner Form einzuschränken, Acrylglas, Formmassen, Rohstoffe für andere Spritzguss- oder Extrusionsanwendungen, Folien, Spiegelfolien, Verpackungsfolien, Folien für optische Anwendungen Laminate, Laminatkleber, Schäume, Dichtschäume, aufgeschäumte Materialien für Verpackungen, Kunstfasern, Kompositmaterialien, Lackbindemittel, Lackadditive wie Dispergieradditive oder Partikel für Kratzfestbeschichtungen, Grundierungsmittel, Bindemittel für Kleb-, Heißkleb-, Haftkleb-, Reaktivkleb- oder Dichtstoffe, Heißsiegellacke, Verpackungsmaterialien, Dentalmaterialien, Knochenzement, Kontaktlinsen, Brillengläser, weitere Linsen z.B. in industriellen Anwendungen, Straßenmarkierungen, Fußbodenbeschichtungen, Plastisole, Unterbodenbeschichtungen bzw. Dämmungen für Fahrzeuge, Dämmmaterialien, Materialien für die Verwendung in der Galenik, Drug-Delivery-Matrizes, Öladditive wie Fließverbesserer, Polymeradditive wie Schlagzähmodifier, Kompabilisierer oder Fließverbesserer, Spinnfaseradditive, Partikel in kosmetischen Anwendungen oder als Rohstoff zur Herstellung von porösen Formen.

### Beispiele

Die gewichtsmittleren Molekulargewichte der Polymere aus den Beispielen 1 bis 38 wurden mittels GPC (Gelpermeationschromatographie) bestimmt. Die Messungen wurden mit einer PL-GPC 50 Plus der Firma Polymer Laboratories Inc. bei 40 °C in THF gegen einen Polystyrolstandard durchgeführt. Die Messgrenze für M_{w} liegt bei ca. 400 000 g/mol.

Die gewichtsmittleren Molekulargewichte der Polymere aus den Beispielen 43 bis 48 wurden mittels GPC (Gelpermeationschromatographie) in Anlehnung an DIN 55672-1 bestimmt. Die Messungen wurden mit einer GPC der Firma Polymer Laboratories Inc. bei einer Ofentemperatur von 35 °C, in THF, bei einer Laufzeit von 48 min und gegen einen Polystyrolstandard durchgeführt. Die Messgrenze für M_{w} liegt bei über 15 000 000 g/mol.

Die Bestimmung der Ausbeuten erfolgte durch Auswiegen des isolierten Polymers nach der Trocknung im Vakuum-Trockenschrank bei 60 °C und 20 mbar bis zur Gewichtskonstanz.

### Allgemeine Durchführungsvorschrift für die Beispiele 1 bis 21

In einen 25 mL Rundkolben werden 2,5 g (2,65 mL, 25 mmol) Methylmethacrylat (MMA), die Base (verwendete Base + molares Verhältnis zum MMA: siehe Tabelle 1) und optional ein Lösungsmittel (3 mL; siehe Tabelle) vorgelegt und bei 25 °C gerührt. Bei externer Kühlung mit einem Eis-Kochsalz-Gemisch wird darauf unter stetem Rühren das Isocyanat (verwendetes Isocyanat + molares Verhältnis zum MMA: siehe Tabelle 1) zugegeben. Nach einer Reaktionszeit t (siehe Tabelle 1) unter Rühren und bei 25 °C wird das erhaltene Gemisch in 15 mL Chloroform gelöst und filtriert. Die Lösung wird daraufhin zur Reinigung in 300 mL eisgekühltem Methanol mittels Zutropfen gefällt. Das PMMA fällt als weißer Feststoff an, wird abfiltriert, dreimal mit Methanol gewaschen und im Vakuum-Trockenschrank bei 60 °C und 20 mbar bis zur Massenkonstanz getrocknet. Ergebnisse siehe Tabelle 1.

### Allgemeine Durchführungsvorschrift für die Beispiele 22 bis 27

In einen 25 mL Rundkolben werden 2,5 g (2,65 mL, 25 mmol) Methylmethacrylat (MMA) und die Base (verwendete Base + molares Verhältnis zum MMA: siehe Tabelle 1) vorgelegt und bei 25 °C gerührt. Zu der Lösung wird das Isocyanat (verwendetes Isocyanat + molares Verhältnis zum MMA: siehe Tabelle 2) gegeben und unter Rückfluss erhitzt. Dies entspricht in der Regel einer Temperatur der Lösung von 90 °C. Nach einer Zeit t (siehe Tabelle 2) Rühren am Siedepunkt der Lösung kommt es zur zunehmenden Viskositätserhöhung. Die Lösung wird abgekühlt, das zähe Öl in 10 ml Chloroform gelöst, in 300 mL eisgekühltem n-Hexan mittels Zutropfen gefällt und der erhaltene Feststoff abfiltriert. Das erhaltene PMMA wird mehrmals mit n-Hexan gewaschen und im Vakuumtrockenschrank bei 60 °C und 20 mbar bis zur Massenkonstanz getrocknet.
Aus dem Filtrat der Fällung kann *n*-Hexan abdestilliert werden und der daraus erhaltene Rückstand erneut zur Polymerisation verwendet werden. Es ist bei dieser Art der Aufreinigung mit einem Massenverlust von 5% bis 27% am System Base / Isocyanat zu rechnen. Ergebnisse siehe Tabelle 2.

### Allgemeine Durchführungsvorschrift für die Beispiele 28 bis 32

Die Base (verwendete Base + molares Verhältnis zum MMA: siehe Tabelle 3) wird in einem 25 mL Rundkolben in 3 mL CHCl₃ gelöst. Zu der Lösung werden 2,5 g (2,65 mL, 25 mmol) MMA und das Isocyanat (verwendetes Isocyanat + molares Verhältnis zum MMA: siehe Tabelle 3) gegeben und unter Rückfluss erhitzt. Dies entspricht in der Regel einer Temperatur der Lösung von 90 °C. Nach einer Zeit t (siehe Tabelle 3) Rühren am Siedepunkt der Lösung kommt es zur zunehmenden Viskositätserhöhung. Die Lösung wird abgekühlt, das zähe Öl in 10 ml Chloroform gelöst, in 300 mL eisgekühltem n-Hexan mittels Zutropfen gefällt und der erhaltene Feststoff abfiltriert. Das erhaltene PMMA wird mehrmals mit n-Hexan gewaschen und im Vakuumtrockenschrank bei 60 °C und 20 mbar bis zur Massenkonstanz getrocknet.
Aus dem Filtrat der Fällung kann n-Hexan abdestilliert werden und der daraus erhaltene Rückstand erneut zur Polymerisation verwendet werden. Es ist bei dieser Art der Aufreinigung mit einem Massenverlust von 5% bis 27% am System Base / Isocyanat zu rechnen. Ergebnisse siehe Tabelle 3.

### Allgemeine Durchführungsvorschrift für die Beispiele 33 bis 36 und die Vergleichsbeispiele V1 bis V4

In einen 25 mL Rundkolben wird Mischung A (Zusammensetzung siehe Tabelle 4) vorgelegt und bei 25 °C gerührt. Bei externer Kühlung mit einem Eis-Kochsalz-Gemisch wird darauf unter stetem Rühren Mischung B zugegeben. Nach 18 h unter Rühren bei 25 °C wird das erhaltene Gemisch in 15 mL Chloroform gelöst und filtriert. Die Lösung wird daraufhin zur Reinigung in 300 mL eisgekühltem Methanol mittels Zutropfen gefällt. Entstandenes PMMA fällt als weißer Feststoff an, wird abfiltriert, dreimal mit Methanol gewaschen und im Vakuum-Trockenschrank bei 60 °C und 20 mbar bis zur Massenkonstanz getrocknet. Bei diesem weißen Feststoff kann es sich nur um PMMA handeln. Ein Nachweis erfolgt mittels ¹H-NMR-Spektroskopie. Das Vorliegen von PMMA ist ein Beweis einer erfolgten Polymerisation. Eine gesonderte Charakterisierung der angefallenen Polymere erfolgte in diesem Fall nicht.
In den Beispielen 39 bis 42 und in den Vergleichsbeispielen V1 bis V4 werden jeweils 2,5 g (2,65 mL, 25 mmol) Methylmethacrylat eingesetzt. Dies entspricht 6 molaren Äuivalenten, auf die bezogen jeweils 1 molares Äquivalent Hexamethylendiisocyanat (HDI, 29) und 1 molares Äquivalent 1,1,3,3-Tetramethylguanidin (TMG, 18) bzw. 1,8-Diazabicyclo[5.4.0]undec-7-en (DBU, 14) eingesetzt werden. Ergebnisse siehe Tabelle 4.

### Allgemeine Durchführungsvorschrift für die Beispiele 37 bis 42

In einen 25 mL Rundkolben werden 2,5 g (2,65 mL, 25 mmol) Methylmethacrylat (MMA) und 1,1,3,3-Tetramethylguanidin (TMG, (18), molares Verhältnis zum MMA: siehe Tabelle 5) vorgelegt und bei 25 °C gerührt. Bei externer Kühlung mit einem Eis-Kochsalz-Gemisch wird darauf unter stetem Rühren 1,6-Hexamethylendiisocyanat (HDI, (29), molares Verhältnis zum MMA: siehe Tabelle 5) zugegeben. Nach 7 Tagen unter Rühren bei 25 °C wird das erhaltene Gemisch in 15 mL Chloroform gelöst und filtriert. Die Lösung wird daraufhin zur Reinigung in 300 mL eisgekühltem Hexan mittels Zutropfen gefällt. Das PMMA fällt als weißer Feststoff an, wird abfiltriert, dreimal mit Hexan gewaschen und im Vakuum-Trockenschrank bei 60 °C und 20 mbar bis zur Massenkonstanz getrocknet. Ergebnisse siehe Tabelle 5.

**Tabelle 1**

| **Beis p.** | **Base** | **Isocyanat** | **MMA / Base / Isocyanat** | **t [h ]** | **Lösungsmittel / c_{MMA} [mol/L]** | **M_{w} [g/mol]** | **Ausbeute PMMA [%]** |
|---|---|---|---|---|---|---|---|
| 1 | (14) | (29) | 6 / 1 / 1 | 18 | CHCl₃ / 2,80 | 11290 0 | 69 |
| 2 | | (35) | 2 / 1 / 1 | 18 | Substanz | 26700 0 | 53 |
| 3 | | (34) | 6 / 1 / 1 | 48 | Substanz | 20900 0 | 51 |
| 4 | | (25) | 6 / 1 / 1 | 18 | Substanz | 14100 0 | 28 |
| 5 | (15) | (29) | 6 / 1 / 1 | 34 | CHCl₃ / 2,83 | >4000 00 | 60 |
| 6 | | (34) | 6 / 1 / 1 | 48 | Substanz | >4000 00 | 73 |
| 7 | (18) | (25) | 2 / 1 / 1 | 18 | Substanz | n.b. | 56 |
| 8 | | (29) | 2 / 2 / 1 | 18 | Substanz | n.b. | 89 |
| 9 | (19) | (29) | 1 / 1 / 1 | 18 | Substanz | >4000 00 | 30 |
| 10 | | (25) | 1 / 1 / 2 | 18 | Substanz | 13000 | 24 |
| 11 | (17) | (29) | 6 / 1 / 1 | 18 | Substanz | 66000 | 64 |
| 12 | (1) | (29) | 2 / 1 / 1 | 18 | Substanz | 79000 | 80 |
| 13 | | (35) | 6 / 1 / 2 | 18 | Substanz | 10600 0 | 29 |
| 14 | (10) | (29) | 2 / 1 / 1 | 20 | Substanz | 16100 0 | 25 |
| 15 | (11) | (29) | 2 / 1 / 1 | 18 | Substanz | 10700 0 | 100 |
| 16 | | | 6 / 1 / 1 | 18 | Substanz | 20300 0 | 82 |
| 17 | | | 25 / 1 / 1 | 18 | Substanz | >4000 00 | 73 |
| 18 | | | 3 / 1 / 1 | 62 | Hexan / 2,02 | 63000 | 83 |
| 19 | (7) | (29) | 6 / 1 / 1 | 67 | CHCl₃ / 3,00 | 11310 0 | 65 |
| 20 | | | 6 / 1 / 1 | 20 | THF / 2,21 | 77800 | 57 |
| 21 | (22) | (29) | 2 / 1 / 1 | 24 | Substanz | 22900 0 | 58 |

**Tabelle 2**

| **Beisp.** | **Base** | **Isocyanat** | **MMA / Base / Isocyanat** | **t [h]** | **M_{w} [g/mol]** | **Ausbeute PMMA [%]** |
|---|---|---|---|---|---|---|
| 22 | (2) | (29) | 2 / 1 / 1 | 6 | 167000 | 69 |
| 23 | (3) | (29) | 6 / 1 / 1 | 6 | 229000 | 47 |
| 24 | (4) | (29) | 2 / 1 / 1 | 6 | 88000 | 74 |
| 25 | | (26) | 2 / 1 / 1 | 6 | >400000 | 23 |
| 26 | (20) | (29) | 2 / 1 / 1 | 3 | 63000 | 77 |
| 27 * | | - | 2 / 1 | 30 | 19000 | 12 |

| | | | | | | |
|---|---|---|---|---|---|---|
| * nicht erfindungsgemäß | | | | | | |

**Tabelle 3**

| **Beisp.** | **Base** | **Isocyanat** | **MMA / Base / Isocyanat** | **t [h ]** | **Lösungsmittel / c_{MMA} [mol/L]** | **M_{w} [g/mol]** | **Ausbeute PMMA [%]** |
|---|---|---|---|---|---|---|---|
| 28 | (2) | (29) | 6 / 1 / 1 | 25 | CHCl₃ / 3, 66 | n.b. | 23 |
| 29 | (5) | (29) | 6 / 1 / 1 | 10 | CHCl₃ / 2,82 | > 400000 | 75 |
| 30 | | (26) | 6 / 1 / 1 | 10 | CHCl₃ / 3,76 | > 400000 | 46 |
| 31 | (24) | (26) | 2 / 1 / 1 | 54 | CHCl₃ / 2, 60 | > 400000 | 18 |
| 32 | (22) | (29) | 2 / 1 / 1 | 71 | CHCl₃ / 2, 66 | n.b. | 24 |

**Tabelle 4**

| **Beisp.** | **Mischung A** | **Mischung B** | **Polymerisation** |
|---|---|---|---|
| V1 | HDI (29) / MMA | - | nein |
| V2 | DBU (14) / MMA | - | nein |
| V3 | DBU (14) / HDI (29) | MMA | nein |
| 33 | DBU (14) / MMA | HDI (29) | ja |
| 34 | MMA / HDI (29) | DBU (14) | ja |
| V4 | TMG (18) / HDI (29) | MMA | nein |
| 35 | TMG (18) / MMA | HDI (29) | ja |
| 36 | MMA / HDI (29) | TMG (18) | ja |

**Tabelle 5**

| **Beisp.** | **MMA / TGM (18) / HDI (29)** | **M_{w} [g/mol]** |
|---|---|---|
| 37 | 2 / 1 /1 | 1 170 000 |
| 38 | 6 / 1 / 1 | 2 940 000 |
| 39 | 10 / 1 / 1 | 2 270 000 |
| 40 | 14 / 1 / 1 | 2 670 000 |
| 41 | 20 / 1 / 1 | 2 530 000 |
| 42 | 40 / 1 / 1 | 4 220 000 |

Mit den Beispielen 1 bis 25 in Tabelle 1 wird gezeigt, dass die erfindungsgemäßen Komponenten A und B vielfältig, teilweise sogar bereits bei Raumtemperatur in Lösung oder Substanz als Initiatoren für Methacrylate eingesetzt werden können.

Mit den Beispielen 26 bis 32 (Tabelle 2) wiederum werden Kombinationen der Komponenten A und B gezeigt, die bei höheren Temperaturen in Substanz als Initiatoren eingesetzt werden können. Mit den Beispielen 33 bis 38 (Tabelle 3) werden entsprechend Kombinationen in Lösung bei höheren Temperaturen gezeigt.
Beispiel 20 ist dabei ein System, bei dem es sich bei den Komponenten A und B um ein identisches Carbodiimid, das in einer Charge zugegeben wird, handelt.
In den Beispielen 23 bzw. 24 wurde ein Trithiocarbonat als Base verwendet.

Mit den Beispielen 39 bis 42 (Tabelle 4) wird gezeigt, dass das erfindungsgemäße Verfahren zur Initiierung einer Polymerisation in den Fällen funktioniert, in denen das Monomer und Komponente A oder B vorgelegt werden und die jeweils andere Komponente nachträglich zugegeben wird. Die Initiierung funktioniert nicht, wenn entweder Komponente A (Vergleichsbeispiel V2) oder Komponente B (Vergleichsbeispiel V1) fehlen. Die Initiierung funktioniert auch nicht immer, wenn Komponente A und B vorgelegt werden und das bzw. die Monomere zu dieser Mischung gegeben werden (Vergleichsbeispiele V3 und V4). Eine Ausnahme dazu stellt beispielsweise die Initiierung aus Beispiel 32 dar.

Die Beispiele 43 bis 48 sind dazu geeignet nachzuweisen, dass mit dem erfindungsgemäßen Verfahren insbesondere besonders hohe Molekulargewichte realisiert werden können.

## Patentansprüche

1. Verfahren zur Initiierung einer Polymerisation,
**dadurch gekennzeichnet,**
**dass** die Polymerisation eines vinylischen Monomers M mit einer Komponente A und einer Komponente B initiiert wird,
**dass** es sich bei Komponente A um ein Isocyanat oder ein Carbodiimid handelt,
**dass** es sich bei der Komponente B um eine organische Base handelt, wobei es sich bei der organischen Base um eine Verbindung, die eine Kohlenstoff-Stickstoff-Doppelbindung aufweist, oder um ein Trithiocarbonat handelt,
und **dass** Komponente A und Komponente B getrennt voneinander zu dem Monomer M gegeben werden.

2. Verfahren gemäß Anspruch 1, **dadurch gekennzeichnet, dass** zur Initiierung der Polymerisation zu einer Mischung der Komponente A und eines vinylischen Monomers M Komponente B gegeben wird.

3. Verfahren gemäß Anspruch 1, **dadurch gekennzeichnet, dass** zur Initiierung der Polymerisation zu einer Mischung der Komponente B und eines vinylischen Monomers M Komponente A gegeben wird.

4. Verfahren gemäß mindestens einem der Ansprüche 1 bis 3, **dadurch gekennzeichnet, dass** es sich bei der Komponente A um Dodecylisocyanat, Ethylisocyanat, 1,6-Hexamethylendiisocyanat (HDI), ein HDI-Trimer, Cyclohexylisocyanat, tert-Butylisocyanat, Phenylisocyanat, Toluendiisocyanat (TDI), Isophorondiisocyanat (IPDI) oder ein IPDI-Trimer handelt.

5. Verfahren gemäß Anspruch 1, **dadurch gekennzeichnet, dass** es sich bei der Base um ein Imin handelt.

6. Verfahren gemäß Anspruch 1, **dadurch gekennzeichnet, dass** es sich bei der Base um ein Oxazolin oder ein Isoxazolon handelt.

7. Verfahren gemäß Anspruch 1, **dadurch gekennzeichnet, dass** es sich bei der Base um ein Thiazolin handelt.

8. Verfahren gemäß Anspruch 1, **dadurch gekennzeichnet, dass** es sich bei der Base um ein Amidin oder ein Guanidin handelt.

9. Verfahren gemäß Anspruch 1, **dadurch gekennzeichnet, dass** es sich bei der Base un ein Carbodiimid handelt.

10. Verfahren gemäß Anspruch 1, **dadurch gekennzeichnet, dass** es sich bei der Base um ein Imidazol handelt.

11. Verfahren gemäß mindestens einem der vorhergehenden Ansprüche, **dadurch gekennzeichnet, dass** die Polymerisation als Lösungspolymerisation, Substanzpolymerisation, Emulsionspolymerisation, Suspensionspolymerisation, Miniemulsionspolymerisation oder Mikroemulsionspolymerisation durchgeführt wird.

12. Verfahren gemäß mindestens einem der vorhergehenden Ansprüche, **dadurch gekennzeichnet, dass** das Isocyanat ein bifunktionelles Isocyanat ist.

13. Verfahren gemäß mindestens einem der vorhergehenden Ansprüche, **dadurch gekennzeichnet, dass** das aus dem Verfahren erhaltene Polymer in einer GPC-Messung gegen einen Polystyrol-Standard ein gewichtsmittleres Molekulargewicht zwischen 5000 und 10 000 000 g/mol aufweist.

14. Verfahren gemäß mindestens einem der vorhergehenden Ansprüche, **dadurch gekennzeichnet, dass** es sich bei den vinylischen Monomeren M um Acrylate, Methacrylate, Styrol, von Styrol abgeleitete Monomere, α-Olefine oder Mischungen aus diesen Monomeren handelt.

## Claims

1. Method for initiating a polymerization,
**characterized**
**in that** the polymerization of a vinylic monomer M is initiated with a component A and a component B,
**in that** component A is an isocyanate or a carbodiimide,
**in that** component B is an organic base, the organic base being a compound having a carbonnitrogen double bond, or being a trithiocarbonate,
and **in that** component A and component B are added separately from one another to the monomer M.

2. Method according to Claim 1, **characterized in that** the polymerization is initiated by adding component B to a mixture of component A and a vinylic monomer M.

3. Method according to Claim 1, **characterized in that** the polymerization is initiated by adding component A to a mixture of component B and a vinylic monomer M.

4. Method according to at least one of Claims 1 to 3, **characterized in that** component A is dodecyl isocyanate, ethyl isocyanate, hexamethylene 1,6-diisocyanate (HDI), an HDI trimer, cyclohexyl isocyanate, tert-butyl isocyanate, phenyl isocyanate, toluene diisocyanate (TDI), isophorone diisocyanate (IPDI) or an IPDI trimer.

5. Method according to Claim 1, **characterized in that** the base is an imine.

6. Method according to Claim 1, **characterized in that** the base is an oxazoline or an isoxazolone.

7. Method according to Claim 1, **characterized in that** the base is a thiazoline.

8. Method according to Claim 1, **characterized in that** the base is an amidine or a guanidine.

9. Method according to Claim 1, **characterized in that** the base is a carbodiimide.

10. Method according to Claim 1, **characterized in that** the base is an imidazole.

11. Method according to at least one of the preceding claims, **characterized in that** the polymerization is carried out as a solution polymerization, bulk polymerization, emulsion polymerization, suspension polymerization, miniemulsion polymerization or microemulsion polymerization.

12. Method according to at least one of the preceding claims, **characterized in that** the isocyanate is a difunctional isocyanate.

13. Method according to at least one of the preceding claims, **characterized in that** the polymer obtained from the method, in a GPC measurement against a polystyrene standard, has a weight-average molecular weight of between 5000 and 10 000 000 g/mol.

14. Method according to at least one of the preceding claims, **characterized in that** the vinylic monomers M are acrylates, methacrylates, styrene, styrene-derived monomers, α-olefins or mixtures of these monomers.

## Revendications

1. Procédé pour initier une polymérisation, **caractérisé en ce que** la polymérisation d'un monomère de vinyle M est initiée par un composant A et un composant B, **en ce qu'**il s'agit, pour le composant A, d'un isocyanate ou d'un carbodiimide, **en ce qu'**il s'agit, pour le composant B, d'une base organique, où il s'agit, pour la base organique, d'un composé, qui présente une double liaison carbone-azote ou d'un trithiocarbonate,
et **en ce que** le composant A et le composant B sont ajoutés séparément l'un de l'autre au monomère M.

2. Procédé selon la revendication 1, **caractérisé en ce que** le composant B est ajouté à un mélange du composant A et d'un monomère de vinyle M pour l'initiation de la polymérisation.

3. Procédé selon la revendication 1, **caractérisé en ce que** le composant A est ajouté à un mélange du composant B et d'un monomère de vinyle M pour l'initiation de la polymérisation.

4. Procédé selon au moins l'une quelconque des revendications 1 à 3, **caractérisé en ce qu'**il s'agit, pour le composant A, d'isocyanate de dodécyle, d'isocyanate d'éthyle, de diisocyanate de 1,6-hexaméthylène (HDI), d'un trimère de HDI, d'isocyanate de cyclohexyle, d'isocyanate de tert-butyle, d'isocyanate de phényle, de diisocyanate de toluène (TDI), de diisocyanate d'isophorone (IPDI) ou d'un trimère d'IPDI.

5. Procédé selon la revendication 1, **caractérisé en ce qu'**il s'agit, pour la base, d'une imine.

6. Procédé selon la revendication 1, **caractérisé en ce qu'**il s'agit, pour la base, d'une oxazoline ou d'une isoxazolone.

7. Procédé selon la revendication 1, **caractérisé en ce qu'**il s'agit, pour la base, d'une thiazoline.

8. Procédé selon la revendication 1, **caractérisé en ce qu'**il s'agit, pour la base, d'une amidine ou d'une guanidine.

9. Procédé selon la revendication 1, **caractérisé en ce qu'**il s'agit, pour la base, d'un carbodiimide.

10. Procédé selon la revendication 1, **caractérisé en ce qu'**il s'agit, pour la base, d'un imidazole.

11. Procédé selon au moins l'une quelconque des revendications précédentes, **caractérisé en ce que** la polymérisation est réalisée sous forme de polymérisation en solution, de polymérisation en masse, de polymérisation en émulsion, de polymérisation en suspension, de polymérisation en mini-émulsion ou de polymérisation en microémulsion.

12. Procédé selon au moins l'une quelconque des revendications précédentes, **caractérisé en ce que** l'isocyanate est un isocyanate difonctionnel.

13. Procédé selon au moins l'une quelconque des revendications précédentes, **caractérisé en ce que** le polymère obtenu à partir du procédé présente, dans une mesure par CPG par rapport à un témoin de polystyrène, un poids moléculaire numérique moyen entre 5000 et 10 000 000 g/mole.

14. Procédé selon au moins l'une quelconque des revendications précédentes, **caractérisé en ce qu'**il s'agit, pour les monomères de vinyle M, d'acrylates, de méthacrylates, de styrène, de monomères dérivés de styrène, d'α-oléfines ou de mélanges de ces monomères.
